# EUROPÄISCHE PATENTSCHRIFT

(11) **EP 3 118 651 B1**
(45) Veröffentlichungstag und Bekanntmachung des Hinweises auf die Patenterteilung: **21.04.2021**
(21) Anmeldenummer: 15177315.7
(22) Anmeldetag: 17.07.2015
(51) Int. Cl.: G01S 17/10, G01S 7/487, G01S 17/42, G01S 17/26

(54) **LAUFZEITMESSVORRICHTUNG UND LAUFZEITMESSVERFAHREN MIT AMBIGUITÄTSLÖSUNG IN ECHTZEIT**
TIME-OF-FLIGHT MEASURING DEVICE AND TIME-OF-FLIGHT MEASURING METHOD WITH AMBIGUITY SOLUTION IN REAL TIME
DISPOSITIF DE MESURE DU TEMPS DE VOL ET PROCÉDÉ DE MESURE DU TEMPS DE VOL AVEC SOLUTION D'AMBIGUÏTE EN TEMPS REEL

(43) Veröffentlichungstag der Anmeldung: 18.01.2017
(73) Patentinhaber: Hexagon Technology Center GmbH, 9435 Heerbrugg (CH)
(72) Erfinder: HINDERLING, Jürg, 9437 Marbach (CH); STUTZ, Reto, 9434 Au (CH); SINGER, Julien, 9442 Berneck (CH); WOHLGENANNT, Rainer, 6833 Klaus (AT); BESTLER, Simon, 88085 Langenargen (DE)
(74) Vertreter: Kaminski Harmann

(56) Entgegenhaltungen:
- EP-A1- 2 626 722
- EP-A1- 2 889 642
- JUSSI-PEKKA JANSSON ET AL: "A Multichannel High-Precision CMOS Time-to-Digital Converter for Laser-Scanner-Based Perception Systems", IEEE TRANSACTIONS ON INSTRUMENTATION AND MEASUREMENT, IEEE SERVICE CENTER, PISCATAWAY, NJ, US, Bd. 61, Nr. 9, 1. September 2012 (2012-09-01), Seiten 2581-2590, XP011455780, ISSN: 0018-9456, DOI: 10.1109/TIM.2012.2190343

## Beschreibung

Die vorliegende Erfindung betrifft eine Vorrichtung zur Ambiguitätslösung bei elektronischer Distanzmessung nach Anspruch sowie ein Verfahren nach Anspruch 13. Gattungsgemässe, die Laufzeitmethode verwendende Vermessungsgeräte sind beispielsweise Laserscanner, Profiler, Rotationslaser, LIDAR, Lasertracker und neuerdings auch Totalstationen wie sie bei geodätischen Messaufgaben zum Einsatz kommen. Das hierbei verwendete Prinzip besteht im Wesentlichen darin, gepulste elektromagnetische Strahlung, wie z.B. Laserlicht, auf ein zu vermessendes Ziel auszusenden und nachfolgend die von dem Ziel zurückkommende Reflektion zu empfangen, wobei die Distanz zu dem Ziel anhand der Laufzeit der Impulse bestimmt wird. Solche Pulslaufzeitmesser haben sich mittlerweile auf vielen verschiedenen Anwendungsgebieten als Standardlösungen durchgesetzt.

Zur Detektion des zurückgestreuten Pulses werden unterschiedliche Ansätze verwendet. Bei der so genannten Schwellwertmethode wird ein Lichtpuls detektiert, wenn die Intensität der einfallenden Strahlung einen gewissen Schwellwert überschreitet. Der andere, hier relevante Ansatz basiert auf der zeitlich sehr präzisen Abtastung bzw. dem Sampling des zurückgestreuten Pulses. Ein von einem Zielobjekt zurück gestreutes optisches Signal wird von einem Detektor erfasst. Das vom Detektor erzeugte elektrische Signal wird mittels eines Analog-Digital-Wandlers in eine digitale Signalfolge umgewandelt. Dieses digitale Signal wird anschliessend meistens in Echtzeit weiter verarbeitet. In einem ersten Schritt wird das Signal, oft als Impuls moduliert, durch spezielle digitale Filter erkannt und schliesslich dessen Lage innerhalb der Signalfolge bestimmt. Durch die Verwendung einer Vielzahl von Abtastfolgen kann ein Nutzsignal auch unter ungünstigen Umständen identifiziert werden, so dass auch grössere Distanzen oder verrauschte bzw. mit Störungen behaftete Hintergrundszenarien bewältigt werden können.

Als Stand der Technik sind Sampler-Vorrichtungen bekannt, welche die Zeitachse mit weit über 10GHz abtasten. Bei speziellen Sampler-Vorrichtungen erfolgt ein Sampling durch Abtastung vieler identischer Pulse mit zusätzlicher Verschiebung der Phase, dabei werden auch mit langsameren Hardwarekomponenten virtuell sehr schnelle Abtastraten im Gigahertzbereich realisiert. Auch ist es, wie in der EP 1 832 897 B1 beschrieben, mit derselben ultraschnellen Abtastmethode möglich, in Amplitude, Phase, Polarisation, Wellenlänge und/oder Frequenz codierte oder modulierte Impulse oder Impulsfolgen zu empfangen. Die Abtastung nichtidentischer, z.B. amplitudenmodulierter Pulse im hochfrequenten Bereich ist ebenfalls möglich, auch wenn bei der Auswertung grosse Datenmengen in kürzester Zeit aufkommen.

Eine der einfachsten Modulationsarten ist die Kennzeichnung der einzelnen Impulse oder der Pulsfolgen per Abstandscodierung. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann. Im Wesentlichen wird die Nicht-Eindeutigkeit dadurch erzeugt, dass sich zwischen Vermessungsgerät und Zielobjekt mehr als ein Impuls oder eine Impulsgruppe befindet. Dieses Problem ist auch im Dokument EP 1 832 897 B1 ausführlich beschrieben. Zusätzlich kann die Nicht-Eindeutigkeit noch erschwert werden, dass sich die zum Vermessungsgerät zurückkommende Impulse untereinander vermischen, also mit einer anderen Reihenfolge wieder einkehren als derjenigen, mit welcher sie ausgesandt wurden. Letzteres kann immer dann auftreten, wenn mehrere Impulse in der Luft gleichzeitig "unterwegs" sind, oder anders ausgedrückt: wenn der Sendepulsabstand kürzer ist, als die doppelte Messdistanz.

Eine so genannte Ambiguity-Distanz zeichnet sich dabei durch die längste Distanz aus, bei welcher das reflektierte Signal noch innerhalb einer Emissionsperiode zum Messgerät zurückkehrt, wobei das Signal eine oder mehrere Impulse, also eine Pulsfolge bzw. einen "Burst", umfassen kann. Für die Laufzeitmessung wie für das Phasendifferenzverfahren ist das Phänomen der Mehrdeutigkeit bekannt und ist gemeinhin bis zu jener, mit der längsten Periode korrespondierenden Distanz (Ambiguity-Distanz) lösbar. Beispielsweise wird die Periodizität der Sendesignalfolge so angepasst, dass die Distanz zum Objekt innerhalb der Ambiguity-Distanz bleibt. Aus einer weiter entfernten Objektdistanz folgt also eine geringere Frequenz und somit Messrate, wenn eine Mehrdeutigkeit vermieden werden soll. Die längste Periode kann aber auch durch die in der Sendesignalcodierung implizit enthaltene Langperiodigkeit codiert sein. Als einfachstes Beispiel sei hier die Modulation bestehend aus zwei hohen Frequenzen erwähnt, welche eine langperiodische Schwebung erzeugen. Es ist dabei nicht einmal notwendig, dass die beiden Frequenzen simultan emittiert werden. Solche und in vielen Varianten abgeänderte Codierungsverfahren bis zum Spread-Spectrum-Verfahren mit einem hohen Frequenzinhalt werden unter anderem beim Phasendifferenzverfahren bereits seit Jahrzehnten eingesetzt. Bekannt ist auch, dass bei der Verwendung von hohen Frequenzen mit langperiodischen Schwebungen die Messrate nicht sinkt, sondern es verlängert sich lediglich die Latenzzeit bis die Distanzinformation erfasst ist. Die minimale Latenzzeit entspricht dabei der Lichtlaufzeit über die Ambiguity-Distanz.

Zudem können plötzliche Distanzsprünge zwischen Vermessungsgerät und jeweiligem Zielobjekt zum so genannten Pulse-Wrapping führen, also zu einer Änderung der Reihenfolge der reflektierten Impulse im Vergleich zu der ursprünglichen Reihenfolge bei Aussendung. Im Besonderen tritt dies bei schnell rotierenden Laserscannern oder Profilern auf, wenn ein später ausgesendeter Impuls dennoch früher zum Empfänger gelangt, da er auf ein näher liegendes Zielobjekt ausgesendet wurde und der Impulsabstand nicht gross genug war, um den zuvor ausgesendeten Impuls vorher ankommen zu lassen.

Eine weitere Ambiguität tritt auf, wenn ein Impuls oder eine Pulsfolge auf mehr als ein Zielobjekt auftritt, so zum Beispiel zum Teil auf eine Hauskante und zum Teil auf eine hinter dem Haus liegende Fläche. Dadurch wird das Signal mehr als nur einmal aus unterschiedlichen Distanzen reflektiert und verkompliziert die Messauswertung, weil nicht mehr eindeutig bestimmt werden kann, woher das zweite Echo stammt.

Aus dem Stand der Technik sind daher Distanzmessvorrichtungen mit Impulscodierung bekannt. In der EP 1 832 897 B1 wird beispielsweise eine Laufzeitmessvorrichtung beschrieben, bei welcher zur gleichen Zeit fünf oder mehr Impulse zwischen Sender und Empfänger unterwegs sind. Dadurch kann z.B. eine an einem Fluggerät positionierte Distanzmessvorrichtung mit einer sehr hohen Impulsrate mit vielen Pulsen gleichzeitig in der Luft messen. Die beschriebene Erfindung behandelt aber keine spezifische Modulationserkennung von Empfangspulsen und auch keine Methode zur Lösung von überlappenden oder ineinander verschachtelten Impulsen von Mehrfachzielen.

Aus der US 6,031,601 A ist weiters bekannt, dass für Distanzmessung eine polychromatische oder monochromatische Lichtquelle mittels eines pseudo-randomisierten Nummerncodegenerators moduliert wird. Das vom Target empfangene Licht wird entsprechend der Codierung entschlüsselt und daraus die Distanz berechnet. Diese Lösung hat den Nachteil, dass die generierten RN-Codier-Sequenzen (Random Noise) einen grossen duty cycle (Tastgrad), also ein grosses Verhältnis der Impulsdauer zur Periodendauer haben. Damit sind praktisch nur kleine "Pausen" zwischen den Signalimpulsen vorhanden, was bei Mehrfachzielen zu Überlappungen sowie dazu führt, dass im Zeitbereich der Empfangssignaldarstellung keine einfache Trennung von Mehrfachzielen mehr möglich ist.

Die US 2015/0070683 A1 offenbart ein Distanzmessverfahren per Phasen- bzw. Intervallmodulation für scannende Laufzeitinstrumente. Bei dieser werden die Abstände von Puls zu Puls codiert und die Auswertung der Empfangspulse wird vorgenommen mittels einer seit dem Sendezeitpunkt des zuletzt ausgesendeten Impulses verstrichenen Zeit. Diese relative Laufzeit wird dann mit der relativen Laufzeit des vorhergehenden Puls-Paares verglichen. Die AmbiguitätsLösung beruht darauf, das beobachtete Relativdifferenzen-Schema mit einem erwarteten Schema zu vergleichen gemäss der Erzeugung durch die spezielle Phasenmodulation. Die Relativdistanzen sind für jedes Intervall verschieden, wodurch sich mittels Durchsuchen von vorgegebenen (durch diese spezielle Modulation bestimmten) Tabellen die Eindeutigkeit lösen lässt. Die Lehre aus der US 2015/0070683 A1 hat aber einerseits den Nachteil, nur für diese eine, spezielle Art der Signal-Modulation zu funktionieren, und anderseits, dass die Impulsidentifikation bei Mehrfachzielen nicht mehr eindeutig ist - bei den true/false-Abgleichen entstünden diesbezüglich enorme Datenlücken. Im Dokument US 2015/0070683 A1 wird der Nachteil der störanfälligen Ambiguitylösung teilweise behoben bzw. abgeschwächt mittels einer zusätzlichen Phasenverschiebung von vertikaler Scanlinie zu vertikaler Scanlinie.

In der WO 99/13356 wird eine opto-elektronische Distanzmesseinrichtung beschrieben, welche eine Burst-Modulation aufweist. Diese Vorrichtung ist in der Lage eine Folge von optischen Pulsen mit einstellbaren Paketlängen und einstellbaren Phasenversätzen zu generieren. Dadurch kann beispielsweise das Signal-Rauschverhältnis situativ optimiert, aber auch die Zeitauflösung des Empfangssignals verbessert werden. Eine robuste Signalauswertung zur Lösung eines Eindeutigkeitsproblems ist aber nicht offenbart.

Aufgabe der vorliegenden Erfindung ist demnach die Bereitstellung einer verbesserten Laufzeitmessvorrichtung bzw. eines verbesserten Laufzeitmessverfahrens zur robusten Auswertung der Signale hinsichtlich auftretender Ambiguitäten.

Aufgabe der Erfindung ist weiterhin die Bereitstellung einer verbesserten Laufzeitmessvorrichtung bzw. eines verbesserten Laufzeitmessverfahrens zur robusten Auswertung der Signale hinsichtlich durch Distanzsprünge ausgelöster Ambiguitäten.

Eine weitere Aufgabe der Erfindung ist die Bereitstellung einer verbesserten Laufzeitmessvorrichtung bzw. eines verbesserten Laufzeitmessverfahrens zur robusten Auswertung der Signale hinsichtlich durch Mehrfachziele ausgelöster Ambiguitäten.

Diese Aufgaben werden durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung belangt eine Distanzmessvorrichtung zum Messen der Laufzeit von elektromagnetischen Signalen, mindestens aufweisend: einen Sender zum Aussenden von codierten Sendesignalen gemäss einem von einem Codierer vorgegebenen Muster, einen Empfänger zur Detektierung der von mindestens einem Objekt als Empfangssignale reflektierten Signale, eine Countereinheit mit einem Zeit-Counter zum Schreiben von mit dem Aussenden der Sendesignale und dem Empfang der Empfangssignale jeweils generierten Zeit-Counterwerten in wenigstens ein Register, und eine Steuer- und Auswerteeinheit zum Berechnen der Laufzeit anhand einer Decodierung der Empfangssignale und eines Auslesens des Registers der Countereinheit.

Sie Sendesignale können durch eine vorrichtungsinterne Rückkopplung als Referenzsignale ebenfalls auf den Empfänger leitbar sein, wobei die Steuer- und Auswerteeinheit auch zur Decodierung der Referenzsignale ausgebildet ist.

Die Countereinheit weist einen Signal-Codierungs-Counter auf, welcher simultan mit jeder Signalemission einen zugeordneten Signal-Codierungs-Counterwert erzeugt, welcher bevorzugt mit der Codierung des jeweiligen Sendesignals korreliert.

Die Codierung der Signale kann dabei mindestens eine umfassen von: Intervallmodulation, Amplitudenmodulation, Frequenzmodulation, abstandsmodulierte Doppel- oder Mehrfachimpulse, Burst-Modulation, Polarisationsmodulation, Wellenlängenmodulation.

Die Steuer- und Auswerteeinheit ist dazu ausgebildet, die empfangenen Signale nach der Decodierung direkt als die Reflektionen der ausgesendeten Signale zu identifizieren.

Die Steuer- und Auswerteeinheit ist weiterhin dazu ausgebildet, die zurückgelegte Distanz der ausgesendeten, als zurückkommend erkannten und mittels Decodierung identifizierten Signale anhand der Zeit-Counterwerte unmittelbar zu berechnen.

Die Steuer- und Auswerteeinheit kann zusätzlich oder alternativ dazu ausgebildet sein, die zurückgelegte Distanz der ausgesendeten, als zurückkommend erkannten und mittels Decodierung identifizierten Signale anhand der Zeit-Counterwerte und der Signal-Codierungs-Counterwerte unmittelbar zu berechnen.

Mit der Generierung eines Signal-Codierungs-Counterwertes wird der Beginn eines Aufzeichnungsbereiches ausgelöst, wobei der Aufzeichnungsbereich insbesondere jenem Signal-Codierungs-Counterwert und/oder dem Zeit-Counterwert zum Anfangszeitpunkt des Aufzeichnungsbereiches zugeordnet ist.

Der Aufzeichnungsbereich ist insbesondere mindestens so lang, dass er eine komplette Abfolge einer codierten Signalfolgesequenz umfasst.

Mehrere Aufzeichnungsbereiche können zeitlich nahtlos auf einander folgen oder sich überlappen.

Die Steuer- und Auswerteeinheit ist dazu ausgebildet, die zurückgelegte Distanz der ausgesendeten, als zurückkommend erkannten und mittels Decodierung identifizierten Signale anhand des Zeit-Counterwertes zum Aussendezeitpunkt des Sendesignals, des Zeit-Counterwertes zum Startzeitpunkt des Aufzeichnungsbereiches, in welchem das Signal empfangen wurde, und der zeitlichen Lage des Empfangssignals innerhalb des Aufzeichnungsbereiches zu berechnen.

Die Steuer- und Auswerteeinheit kann weiterhin dazu ausgebildet sein, die zurückgelegte Distanz der ausgesendeten, als zurückkommend erkannten und mittels Decodierung identifizierten Signale anhand des Signal-Codierungs-Counterwertes des Aufzeichnungsbereiches, und der zeitlichen Lage des Empfangssignals innerhalb des Aufzeichnungsbereiches zu berechnen.

Der Signal-Tastgrad liegt bevorzugt unter 50%, insbesondere unter 5%, insbesondere unter 0.5%.

Die durch den Empfänger empfangenen Referenzsignale können zu den von den Zielen reflektierten Empfangssignalen orthogonal sein.

Ein Datenpuffer bzw. Zwischenspeicher kann neben den empfangenen Impulsen auch die ausgesendeten Signale registrieren, oder aber lediglich Informationen über die Identität des Signals sowie den Zeitpunkt der Aussendung als Zeitmarke (time stamp). Eine analoge Detektion des Sendesignals als Startpuls bzw. Referenzpuls erfolgt beispielsweise, wie aus dem Stand der Technik bekannt, entweder anhand einer optischen Umlenkung über zumindest einen teildurchlässigen Spiegel welcher das Lasersendesignal auf den Photoempfänger leitet, oder anhand eines internen elektrischen Kanals, welcher die Sendetriggersequenz auf den elektronischen Empfangskanal leitet.

Ein mittels Hardware oder Software realisierter Counter erzeugt und registriert die Codierung gemäss CodierungsMuster modulierten, gesendeten Impulse oder Impulsfolgen. Das Codierungsmuster kann dabei eine Intervall-, eine Amplituden-, eine Frequenz- oder eine anderweitige Modulationsform sein. Die Signatur des zuletzt bzw. aktuell gesandten Impulses ist damit gespeichert.

Alternativ oder zusätzlich zum obigen Counter kann eine Subnanosekunden genaue Uhr implementiert sein, die wie der obige Counter wenigstens die Zeitpunkte des Sendens und Empfangens der Impulse oder Impulsfolgen ermöglicht. Eine Uhr bezeichnet hier im Wesentlichen lediglich einen schnell inkrementierenden Counter, der die Signalcodierung implizit erfasst.

In einer ersten Ausführungsform wird die fortlaufende Erfassung der empfangenen Signale mittels eines Datenpuffers realisiert, dessen Länge dem zeitlichen Abstand der Periode der Sendepulsfolge entspricht (z.B. einige wenige MHz). Der Datenpuffer erfasst also die Anzahl der Abtastpunkte des Analog-Digital-Wandlers innerhalb einer Sendepulsperiode. Dieser Datenpuffer wird im Folgenden auch als digitales Record-Window (DRW) bzw. Sampling-Window bezeichnet. Die mit dem Counter ermittelte Identität markiert auf der Empfangsseite in diesem ersten Ausführungsbeispiel auch das - synchron aktive - digitale Record-Window (DRW) bzw. Sampling-Window. Das dabei wiederum aufgezeichnete, vom Zielobjekt zurückgesendete Signal wird entsprechend re-identifiziert bzw. decodiert und ist damit direkt dem entsprechenden Sendesignal zuordenbar. Das DRW ist im Wesentlichen ein Zwischenspeicher, welcher die mit einem Analog-Digital-Wandler im GHz-Bereich abgetastete Empfangssignalform abspeichert. Das Signal wird vom optischen Empfänger nahtlos abgetastet und laufend in einen DRW geschrieben. Bei Vorkenntnissen der Ankunftszeiten von Impulsen kann ein Record-Window auch nur ein Teilintervall (Range Gate) aufnehmen und zwischenspeichern. Die "gesampleten" Signale, allgemein auch als Waveform bezeichnet, umfassen die Intensitätsprofile der empfangenen Impulse aber auch lange Bereiche ohne Nutzsignale, die ggf. als Rauschen auftreten. Diese im Nanosekunden- oder sogar Subnanosekunden-Bereich ablaufenden Aufzeichnungs- bzw. Zwischenspeicher-Funktionen werden heute weitgehend in Field Programmable Gate Arrays (FPGA) realisiert.

Geht man von Vielfachimpulsen und Mehrfachzielen aus, so ist es vorteilhaft, dass die Bufferlänge den gesamten Zeitbereich von Sendeimpuls zu Sendeimpuls nahtlos aufnimmt. Bei einer Phasenmodulation (PM), also der verschlüsselnden Abweichung der Intervalle von einem gleichmässigen Schema, kann die Bufferlänge dementsprechend von Impuls zu Impuls bzw. von Pulsfolge zu Pulsfolge verschieden sein. Die Bufferlänge kann aber auch eine wiederkehrend gleiche Länge aufweisen, welche z.B. dem Mittelwert des Intervalls einer Phasenmodulation entspricht. Durch Aneinanderreihung mehrerer Buffer wird ein beliebig langer Zeitachsenabschnitt aufgenommen.

Alternativ kann eine einzelne Bufferlänge auch mehrere Intervalle bzw. Pulsfolgeperioden umfassen. Auch können mehrere Buffer zeitlich parallel bzw. teilweise überlappend aktiv sein.

Gemäss einem Aspekt der Erfindung zählt der Counter beispielsweise von 1 bis n, wenn in der Distanzmessvorrichtung n verschieden codierte Signale programmiert wurden. Damit wird jedem gesendeten Signalmuster eine Identifikationsnummer zugeordnet. Gleichzeitig wird dem empfängerseitigen, aktiven Record-Window die entsprechende Nummer zugeordnet. Bei relativ kurzen Distanzen empfängt und registriert das aktive DRW den Distanzmesspuls mit derselben Codierung. Bei Distanzen hingegen, bei welchen das vorherig gesendete Signal nicht vor dem Aussenden des nächsten Signals wieder empfangen wird, stimmt die ermittelte Identifikations-Nummer des empfangenen Distanzmesspulses nicht mit der Zählernummer des derzeitigen Record-Windows überein. Der Unterschied der beiden Zählernummern zeigt direkt an, wie viele DRW und damit wie viele Impulsintervalle bzw. Impulsperioden zwischen dem Aussenden und dem Empfangen liegen. Diese Anzahl bzw. die zugehörigen Intervallzeiten der verstrichenen Impulsintervalle sind der im aktuellen Record-Window gemessenen Laufzeit hinzuzufügen, womit sich die gesamte Laufzeit des aktuell empfangenen und identifizierten Distanzmesspulses ergibt. Der Counter hat in dieser einfachsten Ausführungsform zwei Funktionen: Einerseits erfasst er den Code des aktuellen Sendepulses anderseits zählt er direkt die Anzahl der ganzen Zeitintervalle (Sendepulsperioden), die zwischen Senden und Empfangen eines Impulses mit derselben Codierung verstrichen sind.

Dieses verbesserte Laufzeitmessverfahren mit direkter Decodierung (beispielsweise in Echtzeit auf einem FPGA) ist ebenfalls robuster hinsichtlich durch Distanzsprünge ausgelöster Ambiguitäten. Die ermittelte Identifikations-Nummer des empfangenen Signalpulses oder der Signalpulsfolge kann bei beliebiger, durch Distanzmesssprünge erzeugte Reihenfolgeänderungen korrekt und ohne jegliche apriori-Annahmen dem Sendepuls richtig zugeordnet, die gesamte Laufzeit ausgewertet und die zugehörige Absolutdistanz zum Zielobjekt berechnet werden.

Bei n verschiedenen ausgesendeten Signalmustern, welche sich in immer derselben Reihenfolge zeitlich wiederholen, kann maximal eine eindeutig aufschlüsselbare Maximaldistanz erreicht werden, welche der Wegstrecke von n Impulsintervalle lang gereistem Licht entspricht.

Es kann mittels der Codierungs-Signatur jedes einzelnen Empfangspulses und mittels eines Puls-Counters (aufweisend die aktuell gesendete Codierungs-Signatur) direkt - und beispielsweise ohne codierungsabhängige apriori-Tabellen und Fallunterscheidungen - die wahre Distanz über die gesamte Ambiguity-Distanz robust berechnet werden.

Bei Mehrfachzielen verdoppelt sich die Anzahl der reflektierten Impulse und eine einfache Codier-/Decodierungsvorschrift wie beispielsweise die Pulsintervalmodulation kann zu Fehllösungen führen. Bei Mehrfachzielen ist es daher angebracht, eine Impulscodierungsart zu wählen, welche Codierungs-Redundanz gegenüber Pulsverdoppelung aufweist. Da die erfinderische Methode mit der direkten Decodierung der empfangenen Impulse und der zeitlicher Zuordnung zum Sendeimpuls gleicher Codierung offen ist gegenüber fast allen erdenklichen Arten von Signalcodierungen, kann eine Codierungsart mit hoher Redundanz gewählt werden. Ein erster Ansatz, die Code-Redundanz zu erhöhen und damit Fehlervermeidung und Robustheit zu erlangen, ist die Anwendung einer Doppelcodierung.

Gemäss einem weiteren Aspekt der Erfindung wird nicht nur der Laufzeitabstand zum direkt vorhergehenden Empfangssignal, sondern eine längere Sequenz betrachtet. Die Robustheit wird dadurch erhöht, dass die für die Signalregistrierung und Auswertung vorgesehenen und den Sendepulscodierungen zugeordneten Empfangsbufferlängen genau so lang sind, wie die jeweiligen Gesamtcodelängen. Es wird also nicht nur der Laufzeitabstand zum direkt vorhergehenden Empfangspuls sondern eine längere Sequenz betrachtet.

Umfasst das Signal beispielsweise eine Sequenz mit einer Gesamtcodelänge von n phasencodierten Impulsen, dann verläuft ein DRW (deren es ebenfalls n gibt) jeweils zwischen den Aussendezeitpunkten der i-ten Impulse, wobei i aus 1 bis n. Dadurch verlaufen die i, den i-ten Impulsen zugeordneten DRW zeitlich versetzt parallel zueinander.

In einem FPGA wird beim Senden des Impulses i ein Buffer mit Index i gestartet, der bis zum Senden des nächsten identischen Impulses i läuft. Ist der zugeordnete Buffer i gefüllt, wird darin nach der Pulsform des Impulses i gesucht. Die Pulse mit anderer Signatur werden in diesem Buffer verworfen. Danach werden beispielsweise die stärksten Ziele mit Code i normal verarbeitet, wobei die wahre Impulslaufzeit (Time of Flight) und damit die wahre Distanz direkt berechnet werden können, denn die DRW-Buffer gleicher Signatur reihen sich ohne Zeitlücken aneinander. Im Falle eines Profilers oder Scanners wird diese gemessene Distanz direkt mit den ebenfalls den Sende-Impulsen i zugeordneten Richtungswinkeln kombiniert abgespeichert. Da jeder Buffer warten muss, bis seine Ambiguity-Distanz gefüllt ist, bleibt die Reihenfolge der Pulse i unter sich erhalten selbst wenn ein beliebiger Distanz-Sprung im Rahmen der Ambiguity-Distanz erfolgt.

Als Alternative zur einfachen Suche eines Signalpatterns mit Code i mittels Intervall-, Amplituden- oder anderweitiger Impulscodierung kann auch ein Teil oder die gesamte Länge der codierten Pulsfolge in Form einer Referenzimpulsfolge gesamtheitlich verglichen werden. Dies kann insbesondere in Form einer Kreuzkorrelation erfolgen und hat den Vorteil, dass durch die Signalauswertung Mehrfachziele erkannt und gelöst werden können. Bei Doppelzielen weist eine Korrelationssuche zwei Empfangspulse desselben Patterns mit Code i aus, womit der Auswerteprozess je eine Distanz zu den beiden zugeordneten Objekten ausgibt.

Der dabei erhöhte Speicherbedarf kann aufgrund der dünnen Besetzung der Daten (sehr kurzer Signal-Duty-Cycle) durch eine ressourcenfreundliche Implementierung im FPGA kompensiert werden. Ebenfalls können die DRW durch eine sofortige Weiterleitung in einen Zwischenbuffer geleert werden, sodass maximal n+1 DRW aktiv sein müssen.

Gemäss einem weiteren Aspekt der Erfindung kann zur Speicheroptimierung nur ein einziges DRW zum Sampling verwendet werden. Dadurch, dass Impulse und DRW über einen Counter (i aus n) indexiert werden, kann der Samplingspeicherbedarf auf eine einzige DRW-Länge reduziert werden. Die Laufzeitinformation ist dann erst nach Durchlaufen der längsten zu bestimmenden Messdistanz vorhanden, aber gespeichert werden lediglich die relativen Feindistanzen innerhalb eines DRW (Distanz über Laufzeit von DRW-Anfang bis Impulseintritt) zusammen mit den jeweiligen Empfangspulscodes und den DRW-Counterwerten des jeweiligen DRW. Mit der anhand einer Decodierung ermittelten Pulscodenummer und der DRW-Counternummer ist es möglich, die Anzahl der Wrap-Arounds zu bestimmen. Die endgültige Laufzeit ist dann gleich der Relativzeit im ausgewerteten DRW zuzüglich der Dauer aller vorausgegangenen DRW-Buffer. Zusätzliche Robustheit kann durch eine mehrfache, redundante Codierung erlangt werden. So kann beispielsweise sowohl die Impulsgruppe als auch der Abstand der Impulsgruppe codiert werden.

Gemäss einem weiteren Aspekt der Erfindung können die Signale anhand eines Bursts codiert werden, welcher insbesondere vom jeweils vorhergehenden Burst differiert. Zur Maximierung der Robustheit können in einer speziellen Ausführung die Burst-Muster signaltheoretisch orthogonal zueinander ausgebildet sein, sodass die Kreuzkorrelationen ihrer Waveformen null sind. Die Ambiguity-Distanz ergibt sich aus der Anzahl der vorhandenen verschiedenen Burst-Codes multipliziert mit dem Abstand der Burstpakete.

Gemäss einem weiteren Aspekt der Erfindung können vom Zielobjekt zurückkommende und am Empfänger des Vermessungsgerätes gleichzeitig eintreffende Signale voneinander unterschieden werden, indem die einzelnen Signale in unterschiedlicher Polarisation erzeugt werden. Dadurch können auf dem Empfangssensor detektierte, sich überlappende Signale direkt hinsichtlich der Polarisation auseinander gehalten werden. Zudem vermindert eine Verkleinerung des duty cycles die Wahrscheinlichkeit einer Überlagerung, indem die Signale (Bursts, modulierte Impulse, Impulsfolgen, etc.) so kurz wie möglich und die Pausen zwischen den Signalen so lang wie möglich konfiguriert werden.

Gemäss einem weiteren Aspekt der Erfindung ist der Aufzeichnungsbereich (DRW) variabel in seiner Länge. Insbesondere schliesst sich das DRW automatisch, sobald mindestens ein ihm zugewiesenes Signal erkannt wurde. Dies ist dadurch möglich, dass das Decodieren der vom Recorder aufzeichneten Signale in einem nahtlosen Streaming-Prozess erfolgt. Damit ist der Buffer nur so lang wie nötig und belegt nicht unnötigerweise Speicher. Dabei hat das DRW eine Maximallänge bzw. ein Abbruchkriterium, wodurch es sich bei nicht auffinden des Signals automatisch schliesst.

Gemäss einem weiteren Aspekt der Erfindung ist der Aufzeichnungsbereich (DRW) fragmentiert in bevorzugt gleichgrossen Stücken. Wiederum per Streaming baut sich das DRW stufenweise so lang auf, bis das zu identifizierende Signal erkannt wurde. Danach wird der Speicher wieder freigegeben.

Gemäss einem weiteren Aspekt der Erfindung ist auch eine Abfolge ohne blockweise Zwischenspeicherung der vom AD-Wandler erzeugten Samplingdaten möglich. Die Daten werden beispielsweise im Samplingtakt "seamless" in ein Schieberegister zur weiteren Verarbeitung verwiesen. Dies ist eine weitere Art zur Speicheroptimierung. Bei dieser Methode der Datenerfassung und Weiterverarbeitung wird die Zeitachse nicht mehr blockweise, sondern von Signalsample zu Signalsample kontinuierlich erfasst, analysiert und verarbeitet. Zur Ermittlung der Lichtsignallaufzeit zwischen Vermessungsvorrichtung und Zielobjekt ist bei dieser Methode ein Counter wie in den obigen Ausführungsformen beschrieben nicht mehr ausreichend. Der Counter, welcher in den obigen Ausführungsformen beides sowohl die Identifikation der codierten Sendesignale als auch die verflossenen Zeitintervalle (DRW) zählt, markiert bei dieser Seamless-Methode nur noch die individuelle Codierung des Sendesignals. Da heutige mit FPGA-Technologie gehandhabte Uhren im ns-Takt inkrementieren (beispielsweise Uhren als schnelle Counter mit einer Datenbreite von mehr als 16 Bit), ist es möglich, den Zeitpunkt der Lasersignale mit Zeitmarken (Time Stamps) zu versehen, welche als Grobwerte der Startzeit zusammen mit den Pulsidentitäten (Counterwerten) festgehalten werden. Der Picosekunden genaue Zeitpunkt des Startpulses wird mit einer bekannten Subsampling-Interpolationsmethode aus den im Schieberegister transient zwischengespeicherten Signalsamples ermittelt und ebenfalls gespeichert. Die empfangenen Daten im Schieberegister werden laufend beispielsweise mittels einer Impulserkennungsvorschrift oder einer Kreuzkorrelation im Samplingtakt durchsucht. Wird ein Empfangssignal mit ausreichendem SNR (signal-tonoise ratio) detektiert, so wird dieses mit einer Zeitmarke (Time Stamp) versehen. Zudem wird die Feinverschiebung des Signalpulses zum Samplingraster mit einer bekannten Subsampling-Interpolationsmethode bestimmt und beide Zeiten in ein Register gespeichert. Gleichzeitig zum Time-Stamping (alternativ aber auch erst in einem späteren Schritt) werden die Empfangssignale decodiert und mit dem Codeindex markiert. Vorzugsweise in Echtzeit wird der zum aktuellen Empfangssignal passende, das heisst identische, Codeindex des Startpulses gesucht, und die Laufzeit aus den zugehörigen gespeicherten Time-Stamps direkt berechnet. Die Zeitdaten umfassen dabei die ns-genaue Grobmessung mit den Picosekunden Zeitinterpolationswerten.

Alternativ kann auch auf den Pulsidentifikations-Counter verzichtet werden. Der als Uhr im ns-Takt inkrementierende Counter, mit einer Breite von beispielsweise 18Bit, ist durchwegs ausreichend, um alle relevanten Zeit- und Codierungs-Informationen über eine kilometerlange Messdistanz aufzunehmen.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1:: Schemenhafte Darstellung eines erfindungsgemässen Vermessungsgerätes;
- Fig. 2:: Prinzipskizze der Bestandteile eines erfindungsgemässen Vermessungsgerätes;
- Fig. 3a-e:: Ambiguität bei mehreren gleichzeitig im Flug befindlichen, ausgesendeten Signalen;
- Fig. 4a-e:: Ambiguität bei plötzlichem Distanzsprung ausgesendeten Signalen;
- Fig. 5a-c:: Ambiguität bei multiplen Zielen;
- Fig. 5d:: Ausführungsform der Ambiguitätslösung;
- Fig. 6a-b:: Ambiguität bei nahe beabstandeten Doppelzielen;
- Fig. 7a-e:: Beispielhafte Auswahl von Signalmodulationen gemäss der Erfindung;

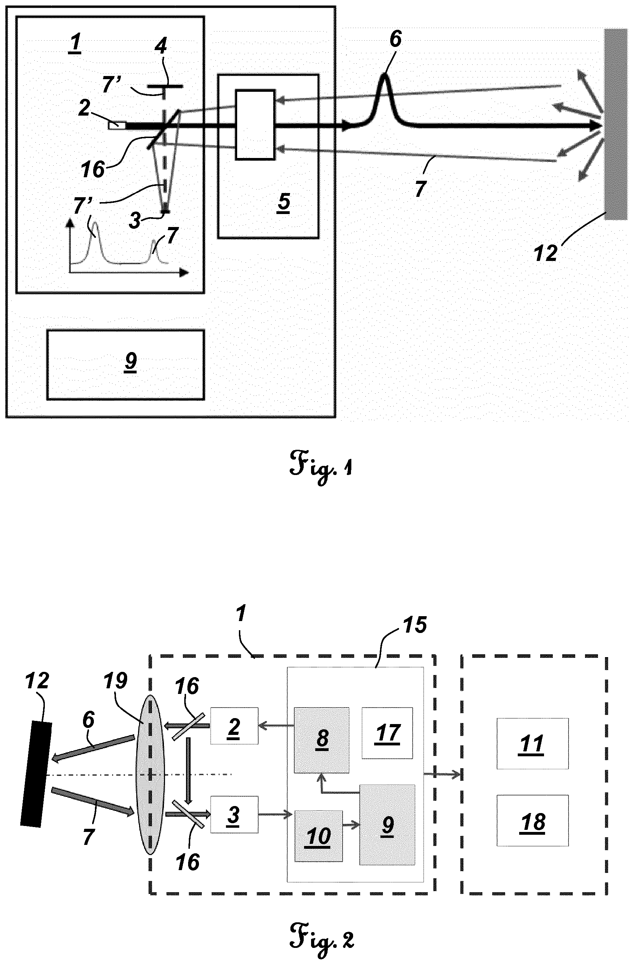

Figur 1 zeigt schemenhaft ein erfindungsgemässes Vermessungsgerät, welches eine Distanzmesseinheit 1, eine Ablenkeinheit 5 und eine Auswerteeinheit 9 aufweist, wobei letztere ein FPGA (Field Programmable Gate Array) und eine CPU (Central Processing Unit) aufweisen kann. Auch kann die Auswerteeinheit 9 in einer SoC-FPGA Architektur aufgebaut sein, welche ein HW-Prozessorsystem aufweist, bestehend aus einem Prozessor, Peripherieeinheiten und Memory-Schnittstellen mit Breitband-Bus-Anbindung an das FPGA-Teil. Die Distanzmesseinheit 1 weist mindestens eine Referenzsignaleinheit 4 sowie einen Empfänger 3 auf. Der Empfänger 3 ist vorgesehen zum Empfang der vom Zielobjekt 12 zurückkommenden Empfangssignale 7, und/oder der Referenzsignale 7', welche die durch einen teildurchlässigen Spiegel 16 umgeleiteten Sendesignale 6 sind. Die Sendesignale 6 werden vom Sender 2 (z.B. eine Laserdiode, Superlumineszenz-LED mit optischem Verstärker oder Faserlaser) ausgesendet und durch ein optisches System mit Ablenkeinheit 5 auf das Zielobjekt 12 gelenkt.

Figur 2 zeigt die Prinzipskizze eines erfindungsgemässen Vermessungsgerätes, welches - wie bei gattungsgemässen Laservermessungsgeräten wie Laserscannern, Profilern und Lasertrackern üblich ist - zum einen im Unterbau mindestens eine Winkelmesseinheit 11 und einen Systemcomputer 18 aufweist, und zum anderen in der eigentlichen Distanzmesseinheit beispielsweise mindestens die in Figur 1 gezeigten diversen Komponenten.

Ein Codierer 8, welcher hier separat vom Sender 2 gezeigt ist, aber auch in diesen integriert sein kann, stellt codierte Signale 6, wie Impulse, Pulsfolgen oder Impuls-Bursts und/oder auch Wellenlängen oder Polarisation bereit. Der Sender 2 sendet diese codierten Signale 6 z.B. zu einer Optik 19, welche die Signale 6 auf ein Zielobjekt 12 lenkt. Dazu kann es ggf. einer eigenen Ablenkeinheit 5 mit einer weiteren Winkelmesseinheit bedürfen, welche nicht gezeigt ist. Optional kann das Sendesignal 6 auf seinem Weg teilweise umgelenkt werden, z.B. durch ein teildurchlässiges Umlenkelement 16. Die Umlenkung des Sendesignals 6 erfolgt auf ein weiteres Umlenkelement 16, welches das Sendesignal 6 wiederum auf die Empfangseinrichtung 3 richtet. Das am Zielobjekt 12 reflektierte Signal 7 fliegt zurück zum Vermessungsgerät und wird dort ebenfalls in den Empfänger 3 eingekoppelt. Damit empfängt der Empfänger 3 sowohl das Sendesignal 6 (in Form des Referenzsignals 7'), als auch das Empfangssignal 7. Zweck des internen Lichtwegs über die Umlenkelemente 16 ist die Bereitstellung eines Startpulses für die Erzeugung eines driftfreien Distanznullpunkts, das heisst zur Kalibration der absoluten Messdistanz zwischen Messvorrichtung und Zielobjekt. Auch kann, wie im Stand der Technik bereits bekannt, statt beide Signale 7' und 7 gleichzeitig, entweder nur das Referenzsignals 7' oder nur das Empfangssignal 7 auf die Empfangseinrichtung 3 gelassen werden. Dies geschieht beispielsweise in Form einer schwenkbaren Klappe zur Strahlunterbrechung. Die Empfangseinrichtung 3 umfasst sowohl einen analogen Signalpfad als auch eine Digitalisierungseinheit unter anderem bestehend aus einem im GHz-Bereich getakteten Analog-Digital-Wandler. Ein Recorder 10 zeichnet zumindest temporär alles auf, was an der Empfangseinheit 3 ankommt. Eine Decodierung und Auswertung der Signaldaten kann dann in der Steuer- und Auswerteeinheit 9 stattfinden. Die meisten digitalen Module wie 8, 9 und 10 können in einem FPGA-Baustein 15 realisiert werden.

Wesentliche Informationen über das, was der Sender 2 aussendet (Modulation bzw. Codierung, Anzahl Impulse, Zeitmarken des Absendens, etc.) werden von der Steuer- und Auswerteeinheit 9 erzeugt und verwaltet. Die Steuer- und Auswerteeinheit 9 veranlasst bei jedem Sendesignal eine Erhöhung des Zählstandes eines Signal-Codierungs-Counters der Countereinheit 17 um eine Zähleinheit. Empfangsseitig analysiert die Steuer- und Auswerteeinheit 9 die digitalisierten Signale und speichert die den Empfangspulsen zugeordneten, verstrichenen DRW-Perioden mittels auslesen des Signal-Codierungs-Counters der Countereinheit 17 ab. Bei der Distanzberechnung wird die Summe dieser verstrichenen DRW-Impulsintervalle ermittelt und zu der im aktuellen Record-Window picosekunden-genau gemessenen Laufzeit hinzuaddiert. Damit ist die absolute Laufzeit auch über mehrere Ambiguity-Intervalle bekannt.

Bei einer weiteren Ausführungsform mit einer "seamless" Datenzwischenspeicherung, also ohne blockweise Datenpufferung, wird ein als Uhr wirkender Zeit-Counter der Countereinheit 17 eingesetzt, der vorzugsweise im Takt des Analog-Digital-Wandlers inkrementiert. Optional kann zusätzlich der Signal-Codierungs-Counter beibehalten werden. Die Steuer- und Auswerteeinheit 9 legt bei jedem gesendeten Impulsmuster einen Eintrag (Time Stamp) in einem Senderegister ab. Der Eintrag besteht aus der Zeitmarke des als Uhr wirkenden Counters und aus dem Signalcode des Signal-Codierungs-Counters. Bei speziellen Impulsfolgencodierungen, wie bei Doppelpulsen mit codiertem gegenseitigem Abstand, genügt es auch lediglich die den einzelnen Pulsen zugeordneten Zeitmarken im Senderegister abzulegen. Der Code des Sendesignals lässt sich dann anhand der abgelegten Zeitmarken jederzeit wieder rekonstruieren. In diesem Fall kann auf den Signal-Codierungs-Counter in der Countereinheit 17 verzichtet werden. Empfangsseitig organisiert die Steuer- und Auswerteeinheit 9 ein zweites Register. Bei jedem erkannten, d.h. bei durch ausreichendes SNR (signal noise ratio) detektiertem Empfangssignalimpuls wird synchron der Stand des als Uhr wirkenden Counters der Countereinheit 17 ausgelesen und in einem Empfangspulsregister zusammen mit dem durch Decodierung ermittelten Signalcode abgelegt. Bei speziellen Impulsfolgecodierungen ist es wiederum ausreichend nur die Zeitmarken der empfangenen Einzelimpulsen einer Impulsfolge im Empfangspulsregister speichern. Durch Vergleich der Einträge im Senderegister mit den Einträgen im Empfangsregister werden die zueinander passenden gesendeten Signale mit den oft mehreren empfangenen Signalen gemäss Signaldecodierung gepaart und mittels den registrierten Zeitmarken dann direkt die Laufzeit berechnet. Für den Fall, dass die Register keine Signal-Codierungs-Einträge enthalten, braucht es bei der Registerauswertung einen Zwischenschritt. In diesem Decodierungsschritt werden die jeweils Codemuster bildenden Zeitmarkenanordnungen in den Registern durch einen Suchprozess ermittelt. Mit dieser Decodierungsinformation können dann wie oben die zugeordneten Zeitmarken von Sende- und Empfangspulsen gepaart werden und die Laufzeit und damit die Distanz berechnet werden.

Bei einer im Vergleich zur Figur 2 vereinfachten Ausführungsform kann der interne Lichtweg des Startpulses auch mittels eines Schaltelements unterbrochen werden, dann werden von der Empfangseinheit 3 lediglich die von den Zielobjekten rückreflektierten Signale empfangen. Dies hat den Vorteil, dass Mehrfachziele leichter und robuster ausgewertet werden können. Der Startpuls wird dann nur zu ganz speziellen Zeitpunkten auf die Empfängereinheit 3 gelassen, beispielsweise wenn die Ablenkeinheit 5 den externen Laserstrahl 6 in eine Richtung lenkt, wo sich kein zu vermessendes Objekt befindet.

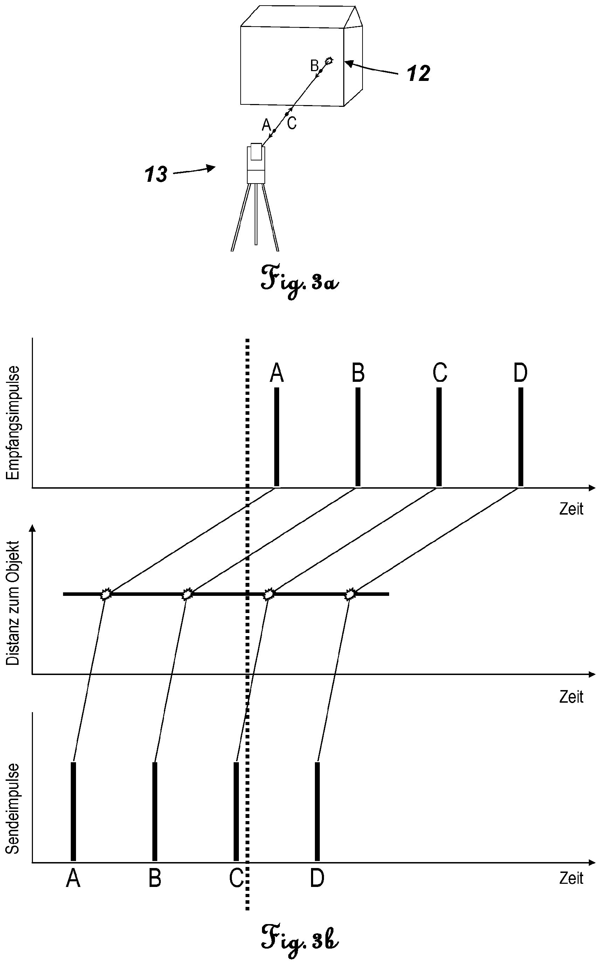

Figur 3a zeigt ein Vermessungsszenario, bei welchem ein Lasertracker 13 mehrere modulierte Impulse A, B, C und D (nicht gezeigt) auf ein anvisiertes Haus als Zielobjekt 12 aussendet. Es ist der Zeitpunkt gezeigt, zu welchem die Impulse A, B und C sich im Flug befinden, wobei A und B bereits vom Haus reflektiert als Empfangssignale zurückkehren, und Impuls C noch als Sendesignal auf dem Weg zum Zielobjekt 12 ist. Die Begrenzung auf 4 verschiedene Codierungsmuster ist rein beispielhaft.

In Figur 3b ist der in Figur 3a gezeigte Zeitpunkt mit der gestrichelten vertikalen Linie in drei Zeitachsen eingetragen, wobei die mittlere Zeitachse qualitativ verdeutlicht, dass alle vier Signale A, B, C und D die gleiche Distanz zum Objekt aufweisen. Die untere Zeitachse zeigt die Aussendezeitpunkte der Signale und die obere Zeitachse die Ankunftszeitpunkte der reflektierten Signale am Vermessungsgerät. Hier ist ersichtlich, dass zum in Figur 3a gezeigten Zeitpunkt (gestrichelte Linie) Signal C noch nicht an der Hauswand angekommen ist, und Signale A und B zwar bereits reflektiert, aber noch nicht wieder am Vermessungsgerät angekommen sind, und Signal D noch nicht ausgesendet wurde.

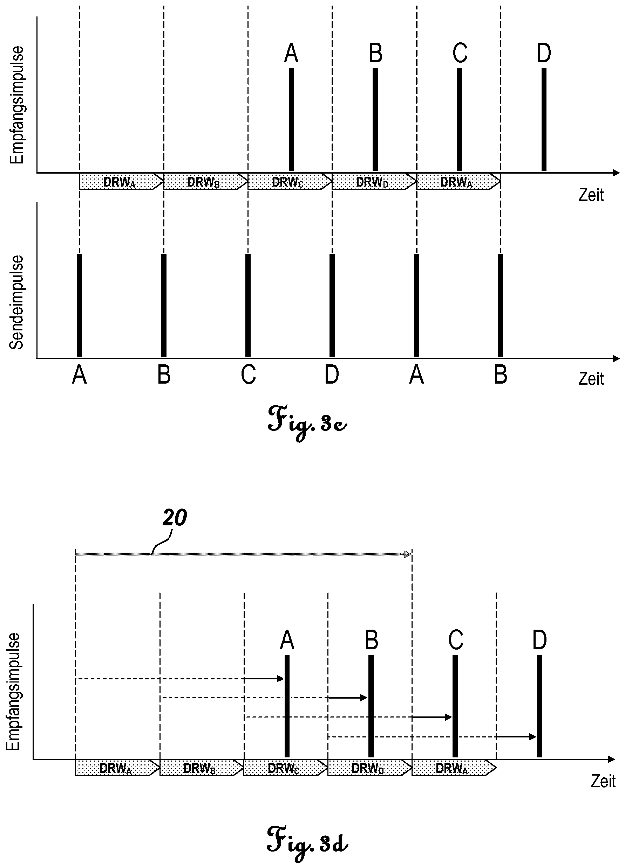

Figur 3c zeigt das gleiche Aussendeschema aus Figuren 3a und 3b sowie die auf der Zeitachse aufgetragenen Aufzeichnungsbereiche DRW_{A}, DRW_{B}, DRW_{C} und DRW_{D}. Dies ist die erste Ausführungsform der Eindeutigkeitslösung, welche mittels Zeit- oder Signal-Codierungs-Counter markierte Zeitabschnitte (Aufzeichnungsbereiche DRWⱼ) verwendet. Das Aussenden von Signal A startet das Aufzeichnungsfenster DRW_{A}, das Aussenden von Signal B startet das Aufzeichnungsfenster DRW_{B}, usw. Es ist ersichtlich, dass das Empfangssignal A wieder am Empfänger ankommt, wenn gerade der Aufzeichnungsbereich DRW_{C} aktiv ist. Mit der entsprechenden Verzögerung gelangen auch die reflektierten Signale B, C und D wieder zum Vermessungsgerät.

Figur 3d zeigt das Berechnungsschema für die Laufzeit der einzelnen Impulse, sowie die längste Periode 20 der Emittiercodierung, welche die Aussendezeitpunkte der Impulse A, B, C und D umfasst. Die gestrichelten horizontalen Linien signalisieren, dass diese Strecken nicht explizit vermessen werden, sondern lediglich in Form einer zusätzlichen Berechnung Berücksichtigung finden.

Vermessen wird hier beispielsweise explizit der Zeitpunkt zwischen dem Aussenden von Signal C und dem Wiedereintreffen von Signal A (horizontaler Pfeil, Volllinie). Anhand der Zuordnung: Empfangssignal A - DRW_{C} erfolgt direkt ein Rückschluss auf die seit Aussendung vergangene Zeit. Ein Zähler (Countereinheit 17) markiert jeweils den aktuellen Zwischenspeicher (DRWⱼ). Nach Abschluss des DRW durchsucht die Steuer- und Auswerteeinheit 9 den Inhalt des DRW nach Empfangssignalen und decodiert die zugehörigen Codes (A,B,...). Die Steuer- und Auswerteeinheit 9 ermittelt anhand des Codes der Empfangssignale und des dem DRW-Puffer zugeordneten Counterwerts die Anzahl der verstrichenen DRW-Intervalle, was den gestrichelten horizontalen Linien entspricht. Die gesamte Signallaufzeit ist die Summe der verstrichenen, ganzzahligen DRW-Intervalle und der ermittelten relativen Laufzeit des gerade ausgewerteten DRW-Puffers (durchgezogene horizontale Linien).

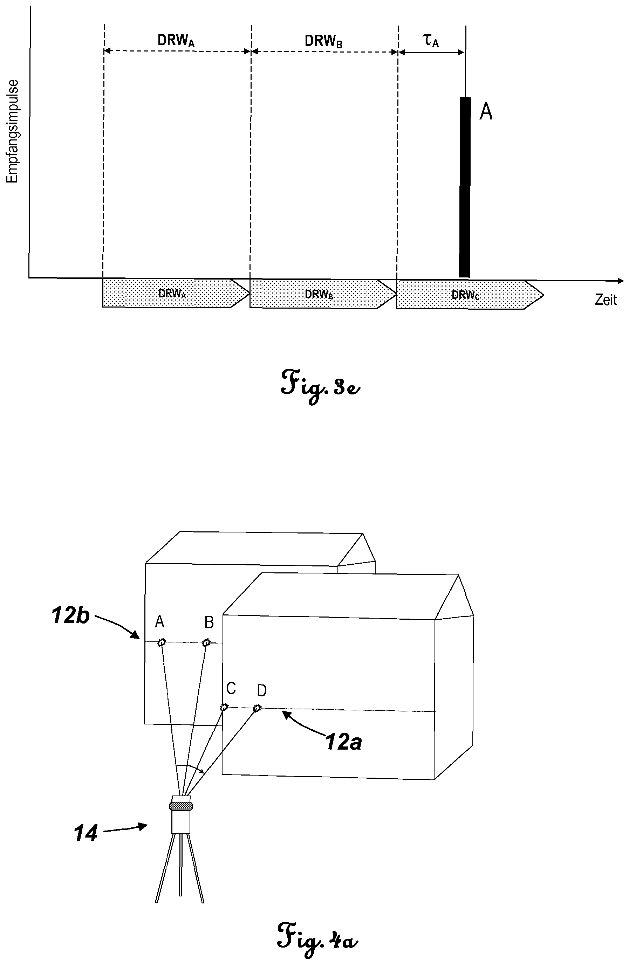

Figur 3e zeigt im Detail die zu addierenden Zeitstreckenkomponenten, welche aus der Figur 3d hervorgingen: DRW_{A} + DRW_{B} + τ_{A}. Die dem Sendepuls mit Codierung A zugeordnete Distanz entspricht damit der Grösse 0.5*c₀*(DRW_{A} + DRW_{B} + τ_{A}), wobei c₀ die Lichtgeschwindigkeit in Luft bezeichnet.

Figur 4a zeigt ein Vermessungsszenario, bei welchem ein Laserscanner, Rotationslaser oder Laserprofiler 14 durch seine Rotation fortlaufend eine Ebene abtastet. Diese Ebene führt im Beispiel entlang zweier Hauswände, wodurch ein plötzlicher Distanzsprung beim Scannen passiert. Während Signale A und B noch auf dem hinteren Haus 12b aufprallen, werden die Signale C und D erst auf der deutlich weiter vorne stehenden Hauswand 12a reflektiert. Die einzelnen Impulse und deren Standorte sind in dieser Darstellung nicht gezeigt.

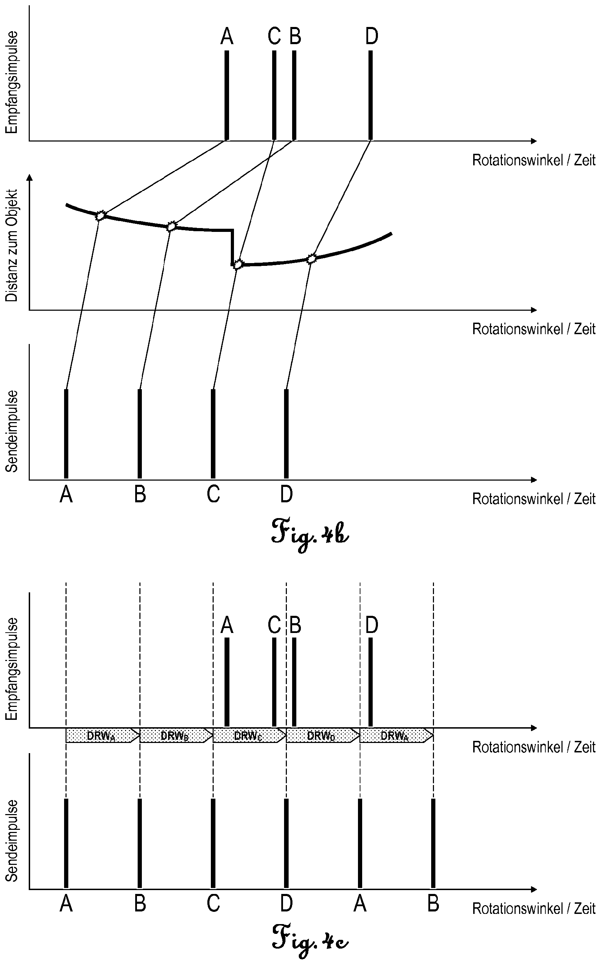

Figur 4b verdeutlicht analog zu Figur 3b in der Mitte, dass sich die Distanz zum Objekt mit der Rotation des Laserscanners verändert, wobei hier deutlich der Distanzsprung von der einen Hauswand 12b zur anderen Hauswand 12a als Knick zu vernehmen ist. Dadurch passiert es, dass Signal C noch vor Signal B wieder zum Empfänger gelangt.

Figur 4c zeigt analog zu Figur 3c, wie die erfinderische Markiermethode mittels eines Interval-Counters (Signal-Codierungs-Counter) und/oder Time-Stamp-Counters (Zeit-Counter) dieses Verschachtelungsproblem löst und die Eindeutigkeit der Sende- und Empfangspulszuordnung herstellt. Beispielsweise ist hier die erste Ausführungsform der erfinderische Methode mit den Aufzeichnungsbereichen DRWⱼ, welche wiederum mittels Index j = (A, B, ...) der Sendecodierung zugeordnet sind, dargestellt. Ebenfalls werden die Aufzeichnungsbereiche DRW_{A}, DRW_{B}, DRW_{C} und DRW_{D} gestartet, jeweils ausgelöst durch das Aussenden der entsprechenden Signale A, B, C und D.

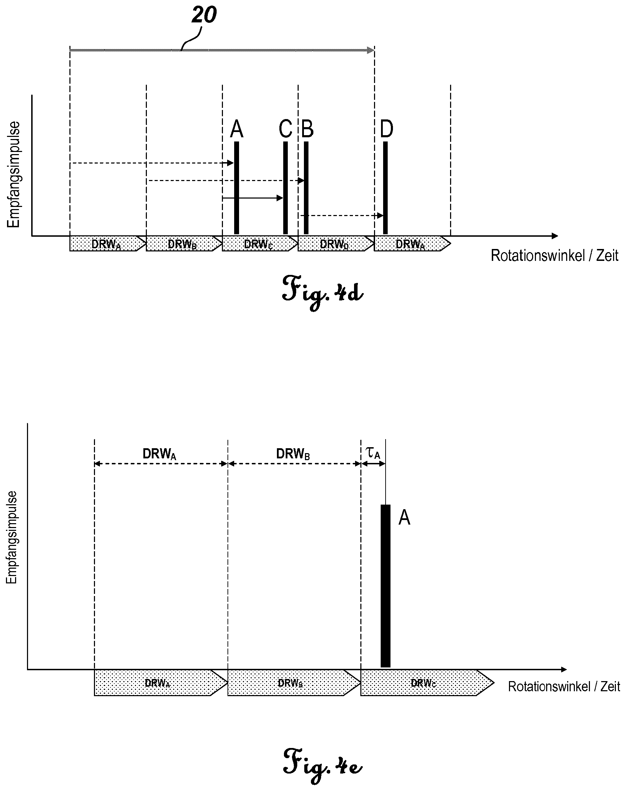

Figur 4d zeigt analog zu Figur 3d, wie die Berechnung der korrekten Distanzen eindeutig stattfindet. Beispielsweise wird Empfangspuls mit Code B im DRW mit dem Counterwert D empfangen (DRW_{D}), die Steuer- und Auswerteeinheit 9 berechnet sofort, dass zwischen B und D zwei komplette DRW-Intervalle liegen. Die gesamte Laufzeit ergibt sich daher aus der Dauer von DRW_{B}, DRW_{C} und der aktuell gemessenen Teillaufzeit τ_{A} im DRW_{D}. Dies zeigt Figur 4e im Detail: DRW_{A} + DRW_{B} + τ_{A} .

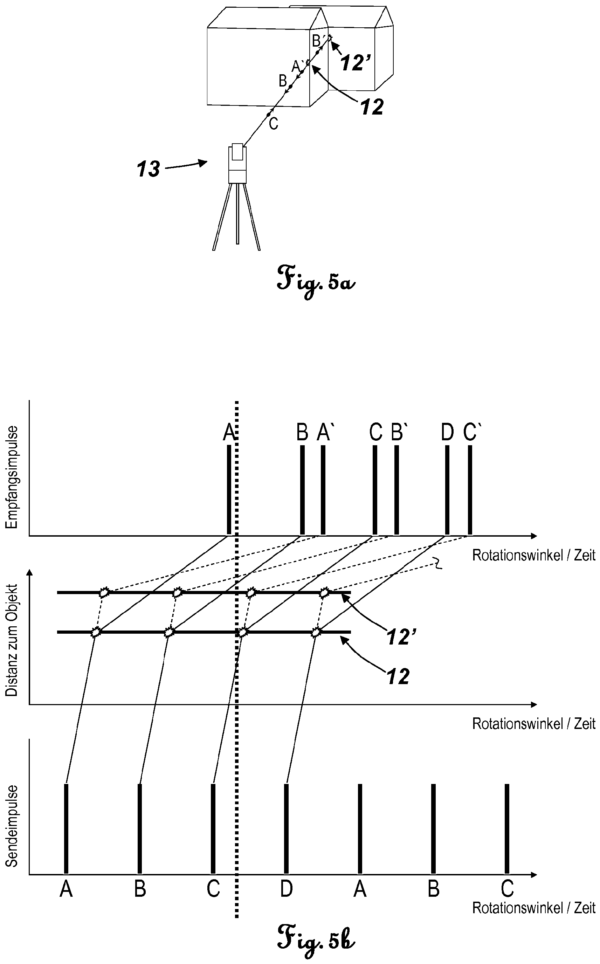

Figur 5a zeigt ein Vermessungsszenario, bei welchem ein Lasertracker 13 mit dem Laserstrahl eine Hauskante 12 anvisiert und dabei auch teilweise das dahinter stehende Haus 12' anzielt. Aufgrund der ausgedehnten Querschnittsdimension des Laserstrahls wird an Objektkanten der Messstrahl zweigeteilt, ein Teil des Sendesignals trifft die nähere Hauswand 12 im Vordergrund und der restliche Teil des Lichts trifft die Oberfläche des entfernteren Hauses 12'. Dieses so genannte Mehrfachzielproblem zeichnet sich dadurch aus, dass der Empfänger unerwartet mehrere Reflektionen erhält und diese nicht mehr eindeutig zum Sendesignal zuordnen kann. Zum gezeigten Zeitpunkt ist die Reflektion des Signals A an der ersten Hauswand 12 bereits wieder im Vermessungsgerät 13 angelangt. Die Reflektion des Signals A an der hinteren Hauswand 12' hingegen ist noch auf dem Weg zurück zum Lasertracker 13. Ebenso befindet sich noch das von der ersten Hauswand 12 reflektierte Signal B auf der Reise. Der nicht an der ersten Hauswand 12 reflektierte Anteil des Signals B (B') ist noch auf dem Weg zur hinten stehenden Hauswand 12' und Sendesignal C hat soeben das Vermessungsgerät 13 verlassen.

Figur 5b zeigt analog zu Figur 3b den in Figur 5a dargestellten Zeitpunkt anhand der vertikalen gestrichelten Linie. Die mittlere Achse zeigt die beiden unterschiedlich entfernten Objekte 12 und 12', wobei die Reflektionen A', B', C' vom Objekt 12' aufgrund der längeren Reisedistanz verspätet empfangen werden.

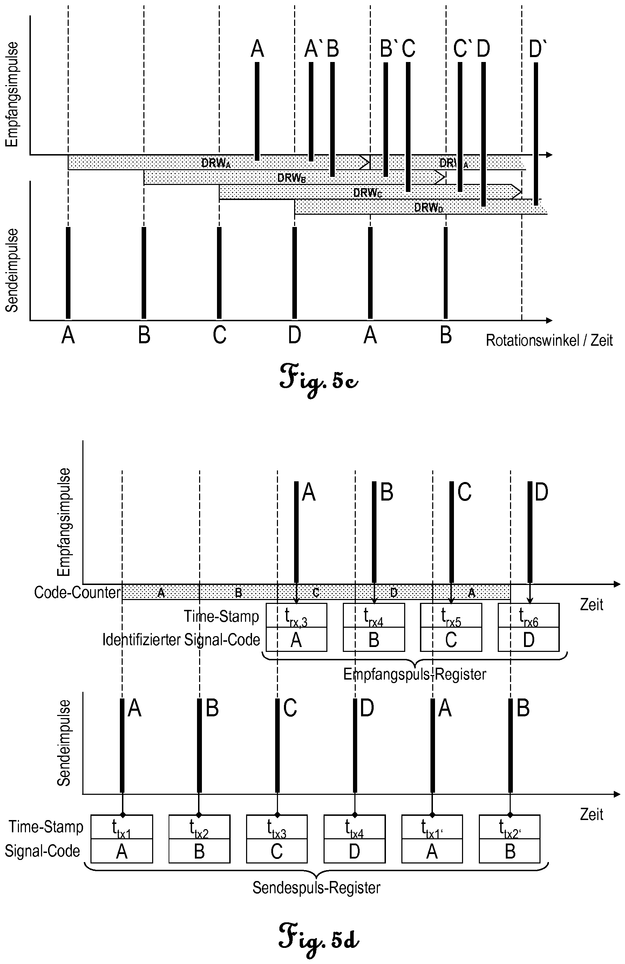

Figur 5c zeigt die dabei entstehende Überlappung der empfangenen Signalsequenzen und eine dazu vorgeschlagene Lösung. Die Aufzeichnungsbereiche DRW_{A}, DRW_{B}, DRW_{C} und DRW_{D} entsprechen der zweiten Realisierungsform zur AmbiguityLösung. Die DRWⱼ Intervalle (j=A,B,...) reichen nun jeweils so lange, bis wieder ein entsprechendes Signal gleichen Codes ausgesendet wurde. DRW_{A} reicht damit z.B. also von Aussendung des Impulses A bis zur nächsten Aussendung des Impulses A. Die Längen der einzelnen Datenpuffer umfasst damit die gesamte Codelänge 20. Um eine möglichst rasche und robuste Empfangssignalauswertung zu erreichen, sind hierbei die DRW nur für ihren eigenen Signal-Typus vorgesehen, sodass beispielsweise DRW_{A} zwar alle Empfangssignalpulse aufzeichnet, die Steuer- und Auswerteeinheit 9 bei abgeschlossener Registrierung von DRW_{A} jedoch nur den zurückkommenden Impuls A, als auch den zurückkommenden Impuls A' erfasst und auswertet.

Figur 5d zeigt eine weitere Ausführungsform ohne blockweise Datenpufferung. Diese Methode benutzt eine Art Schieberegister, in welchem die empfangenen digitalisierten Rohdaten "seamless", also nahtlos, von der Steuer- und Auswerteeinheit 9 analysiert und verarbeitet werden. Ein als Uhr wirkender Zeit-Counter der Countereinheit 17 inkrementiert vorzugsweise im Takt des Analog-Digital-Wandlers. Senderseitig wird jeder Impuls mit einem von der Uhr abgelesenen Time-Stamp versehen, dabei wird ein Eintrag in ein Senderpulsegister angelegt. Optional wird auch der Signalcodierungs-Counter abgelesen und ein Zusatzeintrag im Senderpulsegister eingetragen. Auf der Empfängerseite wird in Echtzeit "seamless" der empfangene Datenstrom nach Empfangssignalen abgesucht. Sobald ein Empfangssignal eintrifft und erkannt wird, wird mindestens ein von der Uhr abgelesener Time-Stamp in einem Empfangspulsregister eingetragen. Optional wird auch der durch Decodieren ermittelte Signalcode als Zusatzeintrag im Empfangspulsregister eingetragen. Die Steuer- und Auswerteeinheit 9 oder eine nachgeschaltete Auswerteeinheit vergleicht laufend die Einträge im Senderpulsregister mit den Einträgen im Empfangspulsregister. Wird zum gesendeten Pulsmuster j innerhalb der Dauer der längsten Periode 20 der Gesamtcodierungsfolge wenigstens ein empfangenes Pulsmuster mit derselben Codierung j gefunden, dann werden die den Sende- und Empfangspulsen zugeordneten Zeitmarken gepaart und mittels Differenzbildung der Zeitmarken und Hinzufügen der durch Subsampling interpolierten Zeitintervalle τ wird die Laufzeit direkt berechnet. Das Ambiguity-Problem ist mit diesem schnell inkrementierenden und als Uhr wirkenden Counter automatisch gelöst.

Als Alternative zur einfachen Suche eines Signalmusters vom Codetypus A, B, C, ... kann auch ein Teil oder die gesamte Länge 20 der codierten Pulsfolge in Form einer Referenzimpulsfolge gesamtheitlich über den jeweiligen Aufzeichnungsbereich DRWⱼ verglichen werden. Dies erfolgt dann beispielsweise in Form einer Kreuzkorrelation. Diese integrale Art der Signalauswertung hat den Vorteil Mehrfachziele robuster zu erkennen und zu lösen. Bei Doppelzielen wird eine Korrelationssuche zwei Empfangssignale desselben Patterns mit Code j und j' ausweisen und damit der Auswerteprozess je eine Distanz zu den beiden zugeordneten Objekten.

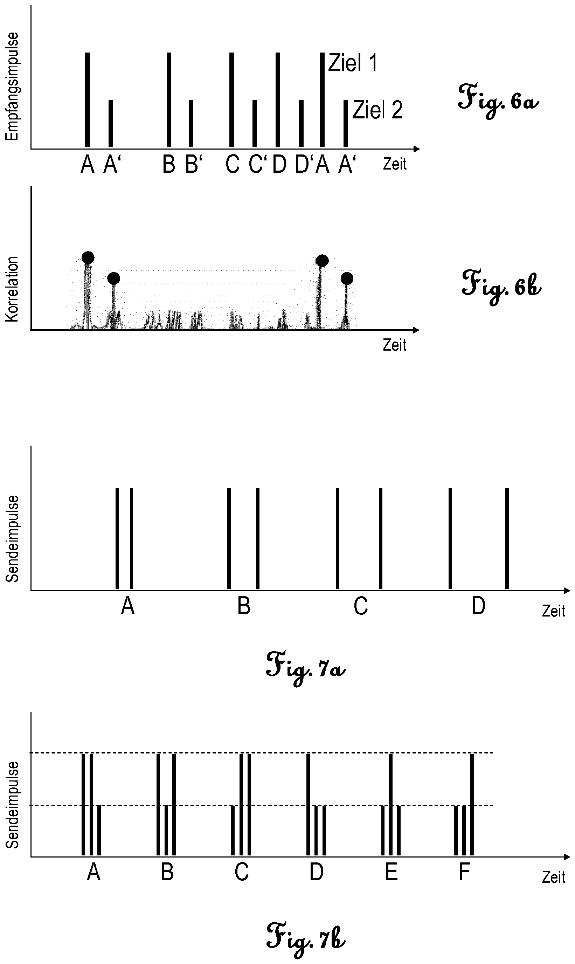

Figur 6a zeigt ein Beispiel einer einfachen Intervallmodulation und Figur 6b die zugehörige Autokorrelationsfunktion für den Fall eines Doppelziels j,j'. Die Kreuzkorrelation zeigt eindeutig zwei Ziele an mit den zugehörigen eindeutigen Zeitpunkten (Mit runden Punkten markierte Amplitudenwerte)

Figuren 6a und 6b zeigen das Ambiguitätsproblem bei nahe beabstandeten Doppelzielen. Insbesondere können sich dabei die elektrischen Empfangsimpulse unter Umständen überlappen, was die Auswertung erschwert. Solche Doppelzielsituationen lassen sich besonders anschaulich lösen mit der Ausführungsvariante der Erfindung wie sie zu Figur 5c beschrieben ist. Die Längen der einzelnen DRW Datenpuffer umfassen die gesamte gesendete Codelänge, mittels Kreuzkorrelation der im Puffer abgelegten Empfangssignalfolge mit einer Musterfolge des Sendesignals werden die Zeitpunkte der beiden Reflexionen ermittelt. Das Ergebnis (runde Punkte) einer Kreuzkorrelationssuche ist in Figur 6b dargestellt.

Figuren 7a-e zeigen unterschiedliche Codierungs- bzw. Modulierungsmöglichkeiten, die erfindungsgemäss eingesetzt werden können.

Figur 7a zeigt eine Doppelpulsmodulation mit codiertem Abstand zwischen den Pulspaaren. In ihrer Gesamtheit werden die Pulspaare als A, B, C und D bezeichnet. Wird die Abfolge A,B,C,D der Signalsequenz zusätzlich noch permutiert, wird also beispielsweise eine Folge A,B,C,D - B,A,C,D - C,A,B,D - A,C,B,D gesendet, dann kann die Eindeutigkeitsdistanz um ein Mehrfaches zusätzlich noch verlängert werden.

Figur 7b zeigt eine Pulsamplitudenmodulation bestehend aus drei gleich beabstandeten Pulsen, wobei einer oder zwei Pulse aus der Gruppe in ihrer Amplitude etwas reduziert sind. Die dargestellte Modulationsfolge erzeugt beispielsweise die Codierungssequenz A,B,C,D,E,F.

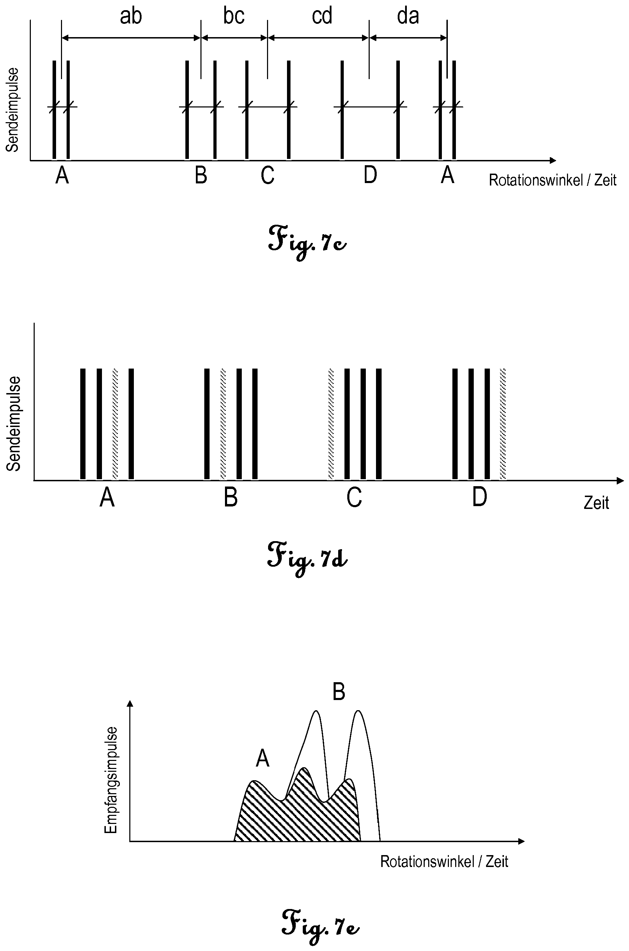

Figur 7c zeigt die Modulation aus Figur 7a, wobei zusätzlich eine Codierung der Intervalle ab, bc, cd und da erfolgt. Bei dieser Codierung ist die Einzelpulsidentifikation zweifach markiert und damit redundant. Falls beispielsweise eine Objektfläche unter schrägem Winkel angemessen wird und sich die Distanz während des Scans laufend verändert, dann kann die eine oder die andere Codierungsart verfälscht sein. Dass aber beide Codierungen gleichzeitig gestört oder verfälscht sind, ist hingegen eher unwahrscheinlich. Damit ist eine redundante Signal-Codierung grundsätzlich robuster. Mittels Doppelcodierung erhöhen sich also der Grad der Redundanz und damit auch die Wahrscheinlichkeit von korrekten Messungen auf Mehrfachziele und dynamisch gescannte Oberflächen.

Figur 7d zeigt eine Burst-Modulation mit Positionscodierung, wobei wiederum die Bursts in ihrer Gesamtheit jeweils als A, B, C und D bezeichnet sind.

Figur 7e zeigt eine Überlagerung zweier am Empfänger detektierter Signale A und B. Solche Signalüberlagerungen sind beispielsweise häufig, falls gleichzeitig das Referenzsignal über den internen Lichtweg als Startpuls auf den Empfänger geleitet wird. Diese beiden Signale können z.B. distinguiert werden, indem der Startpuls mit einer orthogonalen Modulation im Vergleich zu den von den Zielobjekten retournierten Empfangspulsen codiert ist.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander einsetzbar, sowie auch mit entsprechenden Vorrichtungen und Verfahren des Standes der Technik kombinierbar sind.

## Patentansprüche

1. Distanzmessvorrichtung zum Messen der Laufzeit von elektromagnetischen Signalen, mindestens aufweisend:
• einen Sender (2) zum Aussenden von codierten Sendesignalen (6) gemäss einem von einem Codierer (8) vorgegebenen, sich in immer derselben Reihenfolge zeitlich wiederholenden Muster,
• einen Empfänger (3) zur Detektierung der von mindestens einem Objekt (12) als Empfangssignale (7) reflektierten Signale,
• eine Countereinheit (17) mit
□ einem Zeit-Counter zum Schreiben von mit dem Aussenden der Sendesignale (6) und dem Empfang der Empfangssignale (7) jeweils generierten Zeit-Counterwerten in wenigstens ein Register, wobei der Zeit-Counter den Code des aktuellen Sendesignals (6) erfasst und die Anzahl der ganzen Perioden des Sendesignals (6) zählt, die zwischen Senden und Empfangen eines Signals mit derselben Codierung verstrichen sind, und
• eine Steuer- und Auswerteeinheit (9) zum Berechnen der Laufzeit anhand einer Decodierung der Empfangssignale (7) und eines Auslesens des Registers der Countereinheit (17), wobei die Steuer- und Auswerteeinheit dazu ausgebildet ist,
□ die empfangenen Signale (7) nach der Decodierung direkt als die Reflektionen der ausgesendeten Signale zu identifizieren und damit direkt den entsprechenden Sendesignalen zuzuordnen, und
□ die zurückgelegte Distanz der ausgesendeten, als zurückkommend erkannten und mittels Decodierung identifizierten Signale anhand vom Zeit-Counter erfassten Zeit-Counterwerte unmittelbar zu berechnen, indem die zurückgelegte Distanz anhand der Anzahl ganzer Perioden des Sendesignals (6), die zwischen Senden und Empfangen eines Signals mit derselben Codierung verstrichen sind, und der zeitlichen Lage des Empfangssignals innerhalb eines Aufzeichnungsbereiches berechnet wird, wobei der Beginn des Aufzeichnungsbereiches mit der Generierung eines Signal-Codierungs-Counterwertes ausgelöst wird und wobei simultan mit jeder Signalemission der zugeordnete Signal-Codierungs-Counterwert erzeugt wird.

2. Vorrichtung nach Anspruch 1, **dadurch gekennzeichnet, dass**
die Sendesignale (6) durch eine vorrichtungsinterne Rückkopplung (16) als Referenzsignale (7') ebenfalls auf den Empfänger (3) leitbar sind, wobei die Steuer- und Auswerteeinheit (9) auch zur Decodierung der Referenzsignale (7') ausgebildet ist.

3. Vorrichtung nach Anspruch 1,
**dadurch gekennzeichnet, dass**
die Countereinheit (17) weiterhin einen Signal-Codierungs-Counter aufweist, welcher simultan mit jeder Signalemission den zugeordneten Signal-Codierungs- Counterwert erzeugt, welcher mit der Codierung des jeweiligen Sendesignals (6) korreliert.

4. Vorrichtung nach einem der vorangegangenen Ansprüche,
**dadurch gekennzeichnet, dass**
die Codierung der Signale mindestens eine umfasst von:
• Intervallmodulation,
• Amplitudenmodulation,
• Frequenzmodulation,
• abstandsmodulierte Doppel- oder Mehrfachimpulse,
• Burst-Modulation,
• Polarisationsmodulation,
• Wellenlängenmodulation.

5. Vorrichtung nach Anspruch 3 oder Anspruch 3 und 4, **dadurch gekennzeichnet, dass**
die Steuer- und Auswerteeinheit (9) dazu ausgebildet ist, die zurückgelegte Distanz der ausgesendeten, als zurückkommend erkannten und mittels Decodierung identifizierten Signale anhand der Zeit-Counterwerte und der Signal-Codierungs-Counterwerte unmittelbar zu berechnen.

6. Vorrichtung nach einem der Ansprüche 3 bis 5,
**dadurch gekennzeichnet, dass**
der Aufzeichnungsbereich
• jenem Signal-Codierungs-Counterwert und/oder
• dem Zeit-Counterwert zum Anfangszeitpunkt des Aufzeichnungsbereiches
zugeordnet ist.

7. Vorrichtung nach einem der vorangegangenen Ansprüche, **dadurch gekennzeichnet, dass**
der Aufzeichnungsbereich mindestens so lang ist, dass er eine komplette Abfolge einer codierten Signalfolgesequenz umfasst.

8. Vorrichtung nach einem der vorangegangenen Ansprüche, **dadurch gekennzeichnet, dass** mehrere Aufzeichnungsbereiche zeitlich
• nahtlos auf einander folgen oder
• sich überlappen.

9. Vorrichtung nach Anspruch 3 oder Anspruch 3 und 4 oder einem der Ansprüche 6 bis 8, **dadurch gekennzeichnet, dass**
die Steuer- und Auswerteeinheit (9) dazu ausgebildet ist, die zurückgelegte Distanz der ausgesendeten, als zurückkommend erkannten und mittels Decodierung identifizierten Signale anhand
• des Zeit-Counterwertes zum Aussendezeitpunkt des Sendesignals (6),
• des Zeit-Counterwertes zum Startzeitpunkt des Aufzeichnungsbereiches, in welchem das Signal empfangen wurde, und
• der zeitlichen Lage des Empfangssignals (7) innerhalb des Aufzeichnungsbereiches
zu berechnen.

10. Vorrichtung nach Anspruch 3 oder Anspruch 3 und 4 oder einem der Ansprüche 6 bis 9, **dadurch gekennzeichnet, dass**
die Steuer- und Auswerteeinheit (9) dazu ausgebildet ist, die zurückgelegte Distanz der ausgesendeten, als zurückkommend erkannten und mittels Decodierung identifizierten Signale anhand
• des Signal-Codierungs-Counterwertes des Aufzeichnungsbereiches, und
• der zeitlichen Lage des Empfangssignals (7) innerhalb des Aufzeichnungsbereiches
zu berechnen.

11. Vorrichtung nach einem der vorangegangenen Ansprüche,
**dadurch gekennzeichnet, dass**
der Signal-Tastgrad unter 50% liegt, insbesondere unter 5%, insbesondere unter 0.5%.

12. Vorrichtung nach einem der Ansprüche 2 bis 11, **dadurch gekennzeichnet, dass**
die durch den Empfänger (3) empfangenen Referenzsignale (7') zu den von den Zielen reflektierten Empfangssignalen (7) orthogonal sind.

13. Verfahren zum Messen der Laufzeit von elektromagnetischen Signalen, durchgeführt von einem Laserscanner, Profiler, einer Totalstation oder einem Lasertracker, welcher mindestens aufweist:
• einen Sender (2) zum Aussenden von codierten Sendesignalen (6) gemäss einem von einem Codierer (8) vorgegebenen, sich in immer derselben Reihenfolge zeitlich wiederholenden Muster,
• einen Empfänger (3) zur Detektierung der von mindestens einem Objekt (12) als Empfangssignale (7) reflektierten Signale,
• eine Countereinheit (17) mit einem Zeit-Counter zum Schreiben von mit dem Aussenden der Sendesignale (6) und dem Empfang der Empfangssignale (7) jeweils generierten Zeit-Counterwerten in wenigstens ein Register, wobei der Zeit-Counter den Code des aktuellen Sendesignals (6) erfasst und die Anzahl der ganzen Perioden des Sendesignals (6) zählt, die zwischen Senden und Empfangen eines Signals mit derselben Codierung verstrichen sind, und
• eine Steuer- und Auswerteeinheit (9) zum Berechnen der Laufzeit anhand einer Decodierung der Empfangssignale (7) und eines Auslesens des Registers der Countereinheit (17), wobei die Steuer- und Auswerteeinheit dazu ausgebildet ist,
□ die empfangenen Signale (7) nach der Decodierung direkt als die Reflektionen der ausgesendeten Signale zu identifizieren und damit direkt den entsprechenden Sendesignalen zuzuordnen,
□ die zurückgelegte Distanz der ausgesendeten, als zurückkommend erkannten und mittels Decodierung identifizierten Signale anhand von Zeit-Counter erfassten Zeit-Counterwerte unmittelbar zu berechnen, indem die zurückgelegte Distanz anhand der Anzahl ganzer Perioden des Sendesignals (6), die zwischen Senden und Empfangen eines Signals mit derselben Codierung verstrichen sind, und der zeitlichen Lage des Empfangssignals innerhalb eines Aufzeichnungsbereiches berechnet wird, wobei der Beginn des Aufzeichnungsbereiches mit der Generierung eines Signal-Codierungs-Counterwertes ausgelöst wird und wobei simultan mit jeder Signalemission der zugeordnete Signal-Codierungs-Counterwert erzeugt wird.

## Claims

1. Distance measurement apparatus for measuring the time of flight of electromagnetic signals, having at least:
• a transmitter (2) for transmitting coded transmission signals (6) according to a pattern specified by a coder (8), which continues to repeat temporally in the same order,
• a receiver (3) for detecting the signals reflected by at least one object (12) as receive signals (7),
• a counter unit (17) having
□ a time counter for writing time counter values, which are generated in each case with the transmission of the transmission signals (6) and the receipt of the receive signals (7), into at least one register, whereby the time counter captures the code of the current transmission signal (6) and counts the number of complete transmission pulse periods, which have elapsed between transmission and receiving a pulse with the same coding, and
• a control and evaluation unit (9) for calculating the time of flight on the basis of decoding the receive signals (7) and reading the register of the counter unit (17), whereby the control and evaluation unit (9) is configured to
□ directly identify the received signals (7) after the decoding as the reflections of the transmitted signals and thus directly associate with the corresponding transmission signal, and
□ directly calculate the distance travelled by the transmitted signals, which are recognized as returning signals and identified by way of decoding, on the basis of the time counter values by calculating the distance travelled on the basis of the number of complete periods of the transmission signal (6), which have elapsed between transmission and receiving a pulse with the same coding, and the temporal position of the receive signal within a recording period, whereby the beginning of the recording period is triggered with a generating of a signal coding counter value and whereby simultaneously with each signal emission an associated signal coding counter value is generated.

2. Apparatus according to Claim 1,
**characterized in that**
the transmission signals (6) are likewise guidable to the receiver (3) as reference signals (7') through feedback (16) inside the apparatus, wherein the control and evaluation unit (9) is also configured for decoding the reference signals (7').

3. Apparatus according to Claim 1,
**characterized in that**
the counter unit (17) furthermore has a signal coding counter, which generates, simultaneously with each signal emission, the associated signal coding counter value which correlates to the coding of the respective transmission signal (6).

4. Apparatus according to one of the preceding claims, **characterized in that**
coding of the signals comprises at least one of:
• interval modulation,
• amplitude modulation,
• frequency modulation,
• distance-modulated double or multiple pulses,
• burst modulation,
• polarization modulation,
• wavelength modulation.

5. Apparatus according to claim 3 or claim 3 and 4,
**characterized in that**
the control and evaluation unit (9) is configured to directly calculate the distance travelled by the transmitted signals, which are recognized as returning signals and identified by way of decoding, on the basis of the time counter values and the signal coding counter values.

6. Apparatus according to one of claims 3 to 5,
**characterized in that**
the recording period is associated with
• each signal coding counter value and/or
• the time counter value at the beginning of the recording period.

7. Apparatus according to one of the preceding claims,
**characterized in that**
the recording period is in particular at least long enough to comprise a complete sequence of a coded signal sequence.

8. Apparatus according to one of the preceding claims,
**characterized in that**
a plurality of recording periods, in terms of time,
• follow each other seamlessly or
• overlap.

9. Apparatus according to claim 3 or claim 3 and 4 or one of claims 6 to 8,
**characterized in that**
the control and evaluation unit (9) is configured to calculate the distance travelled by the transmitted signals, which are recognized as returning signals and identified by way of decoding, on the basis of
• the time counter value at the transmission time of the transmission signal (6),
• the time counter value at the starting point of the recording period in which the signal was received, and
• the temporal position of the receive signal (7) within the recording period.

10. Apparatus according to claim 3 or claim 3 and 4 or one of claims 6 to 9,
**characterized in that**
the control and evaluation unit (9) is configured to calculate the distance travelled by the transmitted signals, which are recognized as returning signals and identified by way of decoding, on the basis of
• the signal coding counter value of the recording period, and
• the temporal position of the receive signal (7) within the recording period.

11. Apparatus according to one of the preceding claims,
**characterized in that**
the signal duty cycle is below 50%, in particular below 5%, in particular below 0.5%.

12. Apparatus according to one of Claims 2 to 11,
**characterized in that**
the reference signals (7') received by the receiver (3) are orthogonal to the receive signals (7) reflected by the targets.

13. Method for measuring the time of flight of electromagnetic signals, carried out by a laser scanner, profiler, a total station or a laser tracker having at least:
• a transmitter (2) for transmitting coded transmission signals (6) according to a pattern specified by a coder (8), which continues to repeat temporally in the same order,
• a receiver (3) for detecting the signals reflected by at least one object (12) as receive signals (7),
• a counter unit (17) having a time counter for writing time counter values, which are generated in each case with the transmission of the transmission signals (6) and the receipt of the receive signals (7), into at least one register, whereby the time counter captures the code of the current transmission signal (6) and counts the number of complete transmission pulse periods, which have elapsed between transmission and receiving a pulse with the same coding, and
• a control and evaluation unit (9) for calculating the time of flight on the basis of decoding the receive signals (7) and reading the register of the counter unit (17), whereby the control and evaluation unit (9) is configured to
□ directly identify the received signals (7) after the decoding as the reflections of the transmitted signals and thus directly associate with the corresponding transmission signal, and
□ directly calculate the distance travelled by the transmitted signals, which are recognized as returning signals and identified by way of decoding, on the basis of the time counter values by calculating the distance travelled on the basis of the number of complete periods of the transmission signal (6), which have elapsed between transmission and receiving a pulse with the same coding, and the temporal position of the receive signal within a recording period, whereby the beginning of the recording period is triggered with a generating of a signal coding counter value and whereby simultaneously with each signal emission an associated signal coding counter value is generated.

## Revendications

1. Dispositif de mesure de distance destiné à mesurer le temps de vol de signaux électromagnétiques, présentant au moins :
• un émetteur (2) destiné à émettre des signaux émis (6) codés selon un schéma défini par un codeur (8) et qui se répète dans le temps toujours dans le même ordre,
• un récepteur (3) destiné à détecter les signaux réfléchis par au moins un objet (12) en tant que signaux reçus (7),
• une unité de comptage (17) comportant :
□ un horocompteur destiné à écrire, dans au moins un registre, des valeurs d'horocomptage générées lors de l'émission des signaux émis (6) et lors de la réception des signaux reçus (7), ledit horocompteur saisissant le code du signal émis (6) considéré et comptant le nombre de périodes complètes du signal émis (6) écoulées entre l'émission et la réception d'un signal avec le même codage, et
• une unité de commande et d'évaluation (9) destinée à calculer le temps de vol à partir d'un décodage des signaux reçus (7) et d'une lecture du registre de l'unité de comptage (17), ladite unité de commande et d'évaluation étant conçue pour :
□ identifier les signaux reçus (7) après le décodage directement en tant que réflexions des signaux émis, et ainsi les attribuer directement aux signaux émis correspondants, et
□ calculer directement la distance parcourue par les signaux émis, reconnus comme revenant et identifiés au moyen du décodage, à partir de valeurs d'horocomptage saisies par l'horocompteur, par le calcul de la distance parcourue à partir du nombre de périodes complètes du signal émis (6) écoulées entre l'émission et la réception d'un signal avec le même codage, et à partir de l'emplacement temporel du signal reçu dans une période d'enregistrement, le début de ladite période d'enregistrement étant marqué par la génération d'une valeur de codocomptage de signal, et la valeur attribuée de codocomptage de signal étant simultanément créée lors de chaque émission de signal.

2. Dispositif selon la revendication 1,
**caractérisé en ce que**
les signaux émis (6) peuvent également être dirigés vers le récepteur (3) en tant que signaux de référence (7'), par une rétroaction (16) interne au dispositif, l'unité de commande et d'évaluation (9) étant aussi conçue pour décoder les signaux de référence (7').

3. Dispositif selon la revendication 1,
**caractérisé en ce que**
l'unité de comptage (17) présente en outre un codocompteur de signal, qui produit, lors de chaque émission de signal, la valeur attribuée de codocomptage de signal qui est corrélée au codage du signal émis (6) correspondant.

4. Dispositif selon l'une des revendications précédentes,
**caractérisé en ce que**
le codage des signaux comprend au moins une fonction parmi les suivantes :
• modulation d'intervalle,
• modulation d'amplitude,
• modulation de fréquence,
• impulsions doubles ou multiples modulées en distance,
• modulation de salves,
• modulation de polarisation,
• modulation de longueur d'onde.

5. Dispositif selon la revendication 3 ou les revendications 3 et 4,
**caractérisé en ce que**
l'unité de commande et d'évaluation (9) est conçue pour calculer immédiatement la distance parcourue par les signaux émis, reconnus comme revenant et identifiés au moyen du décodage, à partir des valeurs d'horocomptage et des valeurs de codocomptage de signal.

6. Dispositif selon l'une des revendications 3 à 5,
**caractérisé en ce que**
il est attribué à la période d'enregistrement
• la valeur de codocomptage de signal et/ou
• la valeur d'horocomptage au début de la période d'enregistrement.

7. Dispositif selon l'une des revendications précédentes,
**caractérisé en ce que**
la période d'enregistrement est au moins assez longue pour couvrir une succession complète d'une séquence de signaux codée.

8. Dispositif selon l'une des revendications précédentes,
**caractérisé en ce que**
plusieurs périodes d'enregistrement
• se succèdent sans chevauchement ou
• se chevauchent.

9. Dispositif selon la revendication 3 ou les revendications 3 et 4 ou une des revendications 6 à 8,
**caractérisé en ce que**
l'unité de commande et d'évaluation (9) est conçue pour calculer la distance parcourue par les signaux émis, reconnus comme revenant et identifiés au moyen du décodage, à partir
• de la valeur d'horocomptage au moment de l'émission du signal émis (6),
• de la valeur d'horocomptage au début de la période d'enregistrement dans laquelle le signal a été reçu, et
• de l'emplacement temporel du signal reçu (7) dans la période d'enregistrement.

10. Dispositif selon la revendication 3 ou les revendications 3 et 4 ou une des revendications 6 à 9,
**caractérisé en ce que**
l'unité de commande et d'évaluation (9) est conçue pour calculer la distance parcourue par les signaux émis, reconnus comme revenant et identifiés au moyen du décodage, à partir
• de la valeur de codocomptage de signal de la période d'enregistrement, et
• de l'emplacement temporel du signal reçu (7) dans la période d'enregistrement.

11. Dispositif selon l'une des revendications précédentes,
**caractérisé en ce que**
le rapport cyclique du signal est inférieur à 50 %, notamment à 5 %, notamment à 0,5 %.

12. Dispositif selon l'une des revendications 2 à 11,
**caractérisé en ce que**
les signaux de référence (7') reçus par le récepteur (3) sont orthogonaux aux signaux reçus (7) réfléchis par les cibles.

13. Procédé de mesure du temps de vol de signaux électromagnétiques, exécuté par un scanneur laser, un profileur, une station totale ou un laser de relevé présentant au moins :
• un émetteur (2) destiné à émettre des signaux émis (6) codés selon un schéma défini par un codeur (8) et qui se répète dans le temps toujours dans le même ordre,
• un récepteur (3) destiné à détecter les signaux réfléchis par au moins un objet (12) en tant que signaux reçus (7),
• une unité de comptage (17) comportant un horocompteur destiné à écrire, dans au moins un registre, des valeurs d'horocomptage générées lors de l'émission des signaux émis (6) et lors de la réception des signaux reçus (7), ledit horocompteur saisissant le code du signal émis (6) considéré et comptant le nombre de périodes complètes du signal émis (6) écoulées entre l'émission et la réception d'un signal avec le même codage, et
• une unité de commande et d'évaluation (9) destinée à calculer le temps de vol à partir d'un décodage des signaux reçus (7) et d'une lecture du registre de l'unité de comptage (17), ladite unité de commande et d'évaluation étant conçue pour :
□ identifier les signaux reçus (7) après le décodage directement en tant que réflexions des signaux émis, et ainsi les attribuer directement aux signaux émis correspondants,
□ calculer immédiatement la distance parcourue par les signaux émis, reconnus comme revenant et identifiés au moyen du décodage, à partir de valeurs d'horocomptage saisies par l'horocompteur, par le calcul de la distance parcourue à partir du nombre de périodes complètes du signal émis (6) écoulées entre l'émission et la réception d'un signal avec le même codage, et à partir de l'emplacement temporel du signal reçu dans une période d'enregistrement, le début de ladite période d'enregistrement étant marqué par la génération d'une valeur de codocomptage de signal, et la valeur attribuée de codocomptage de signal étant simultanément créée lors de chaque émission de signal.
